# EUROPÄISCHE PATENTANMELDUNG

(11) **EP 0 534 364 A1**
(43) Veröffentlichungstag der Anmeldung: **31.03.1993**
(21) Anmeldenummer: 92116184.0
(22) Anmeldetag: 22.09.1992
(51) Int. Cl.: C02F 1/66, C02F 1/52, C02F 1/72, C02F 1/78, C02F 1/76

(54) **Verfahren zum Reinigen eines durch organische und anorganische Inhaltsstoffe belasteten wässrigen Fluids**

(30) Priorität: 23.09.1991 DE 4131596
(71) Anmelder: L & C STEINMUELLER GMBH, D-51641 Gummersbach (DE)
(72) Erfinder: Schulte, Reinhard, W-5270 Gummersbach (DE); Jaradi, Hussein, W-5415 Nauort (DE)
(74) Vertreter: Carstens, Wilhelm, Dipl.-Phys.

(57) **Zusammenfassung**

Bei einem Verfahren zum Reinigen eines durch organische und anorganische Inhaltsstoffe belasteten wäßrigen Fluids, insbesondere Haus- oder Sondermülldeponiesickerwassers, bei dem das Fluid zumindest einer chemischen Oxidation mit Hilfe eines Oxidationsmittels, einer Fällung und einer Abscheidung des unlösbaren Fällungsproduktes unterzogen wird, ist vorgesehen, daß das Fluid direkt mit Hilfe des Oxidationsmittels oxidiert wird, danach der pH-Wert mit Hilfe einer Säure in einem sauren Bereich unter pH = 7 eingestellt und während einer vorgegebenen Zeit gehalten wird, anschließend der pH-Wert mit Hilfe eines Alkalisierungsmittels in einem alkalischen Bereich pH = 7 eingestellt und während einer vorgegebenen Zeit gehalten wird und anschließend das entsprechende Fällungsprodukt abgeschieden wird, nach Abscheidung des Fällungsproduktes eine erneute Absenkung des pH-Wertes mit Hilfe einer Säure in einem sauren Bereich unter pH = 7 erfolgt und das sich einstellende Fällungsprodukt abgeschieden wird.

## Beschreibung

Die Erfindung betrifft ein Verfahren zum Reinigen eines duch organische anorganische Inhaltsstoffe belasteten wäßrigen Fluids, insbesondere Haus- oder Sondermülldeponiesickerwassers, bei dem das Fluid zumindest einer chemischen Oxidation mit Hilfe eines Oxidationsmittels, einer Fällung und einer Abscheidung des unlösbaren Fällungsproduktes unterzogen wird.

Sickerwässer aus Hausmüll- oder Sondermülldeponien, die durch organische und anorganische Inhaltsstoffe, insbesondere Schwermetalle belastet sind oder ähnlich zusammengesetzte Flüssigabfälle, aber auch entsprechend verschmutzte Brack- oder Meerwässer, die zu Trinkwasser aufbereitet werden sollen, können mit einem Behandlungsschritt alleine nicht gereinigt werden.

Aus der DE-Z. "Entsorgungs-Praxis-Spezial", Nr. 9 (1989) S. 19 - 22, sind verschiedene Verfahrenskombinationen für die Behandlung von Deponiesickerwasser bekannt.

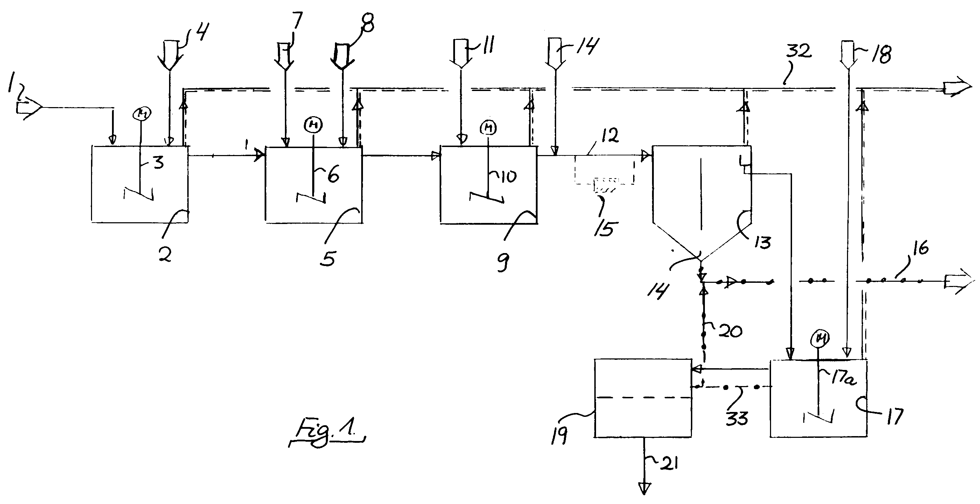

In Abb. 1 von S. 20 sind verschiedene Prozeßkombinationen mit einer aeroben, biologischen Reinigung als Hauptverfahren und nachgeschalteten chemisch-physikalischen Stufen aufgeführt, während in der Abb. 3 Prozeßkombinationen mit einer Umkehrosmose als Hauptverfahren dargestellt sind.

Die Verfahrenskombination: Aerobe Biologie - Flockung/Fällung - Adsorption weist folgende Nachteile auf: Bei einem zu hohen Gehalt an toxisch wirkenden Inhaltsstoffen ist eine biologische Reinigung nur eingeschränkt einsetzbar. Mit den Verfahrensstufen Flockung/Fällung - Adsorption allein ist eine Einhaltung der vom Gesetzgeber geforderten Endwerte wegen nichtadsorbierbarer oder ausfällbarer gelöster Bestandteile nur in Ausnahmefällen möglich.

Bei der Prozeßkombination: Biologie-Umkehrosmose-Eindampfung fällt die biologische Reinigung bei einem zu hohen Gehalt an toxischen Inhaltsstoffen aus. Der Betrieb einer Umkehrosmosestufe ohne Vorreinigung ist wegen zu starker und schneller Verblockung der für die Umkehrosmose eingesetzten Membranen nur eingeschränkt einsetzbar. Bei derer Umkehrosmose erfolgt lediglich eine Rückhaltung und Aufkonzentrierung von Schadstoffen, die einer nachgeschalteten Eindampfung zur weiteren Behandlung zugeführt werden können. Von der Eindampfung ist es bekannt, daß nur eine Trennung von leichtflüchtigen und schwerflüchtigen Bestandteilen stattfindet, so daß für das Destillat weitere Reinigungsstufen zur Elimination von übergetretenen leichtflüchtigen Inhaltsstoffen erforderlich ist.

Die in Abb. 1 als dritte Prozeßkombination dargestellte Kombination: Biologie - chemische Oxidation (Naßoxidation) - biologische Reinigung, stellt ein häufig favorisiertes Verfahren dar, da hier eine wirkliche Umwandlung organischer Schadstoffe in zumeist unschädliche mineralische Bestandteile erfolgt und die Sekundärprobleme infolge von Schlammanfall und Abluft aus den Behandlungsstufen im Vergleich zu den bisher beschriebenen Verfahrenskombinationen geringer ist.

Schwierigkeiten bei dieser Verfahrenskombination können sich ergeben, wenn für die Biologie toxisch wirkende Bestandteile in dem zu behandelnden Fluid vorhanden sind. Eine Naßoxidation alleine ohne Biologie ist häufig aufgrund der komplizierten Matrix mit störenden Inhaltsstoffen im Fluid bei Realisierung einer technischen Anlage aufgrund zu langer Reaktionszeiten kaum in der Lage, die für die Endreinigung angestrebte gewünschte Oxidationsleistung zu erbringen.

Auch eine Verfahrenskombination: Flockung/Fällung - Umkehrosmose - Eindampfung kann nicht in jedem Fall zu einer ausreichenden Reinigung führen, da bei der Flockung/Fällung als erstem Verfahrensschritt gelöste organische Verunreinigungen zu einem großen Teil nicht eliminiert werden. Hierdurch kann es dann sehr schnell zu einem biologischen Bewuchs der Membranen kommen. Durch dieses sogenannte Biofouling verstopfen die Membranen. Für den Eindampfungsschritt dieser Kombination gelten dieselben Nachteile wie bei der vorstehend beschriebenen Verfahrenskombination: Biologie-Umkehrosmose-Eindampfung.

Es ist daher die Aufgabe der vorliegenden Erfindung, ein Verfahren der om Oberbegriff des Anspruchs 1 genannten Art anzugeben, mit deren Hilfe Fluide mit einer komplexen Matrix an organischen und nicht organischen Inhaltsstoffen verschiedener Herkunft aufbereitet werden können und bei dessen Einsatz eventuell nachzuschaltende Feinreinigungsstufen sicher betrieben werden können.

Diese Aufgabe wird dadurch gelöst, daß das Fluid direkt mit Hilfe des Oxidationsmittels oxidiert wird, danach der pH-Wert mit Hilfe einer Säure in einen sauren Bereich unter pH = 7 eingestellt und während einer vorgegebenen Zeit gehalten wird, anschließend der pH-Wert mit Hilfe eines Alkalisierungsmittels in einen alkalischen Bereich über pH = 7 eingestellt und während einer vorgegebenen Zeit gehalten wird und anschließend das entstandene Fällungsprodukt abgeschieden wird und nach Abscheidung des Fällungsproduktes eine erneute Absenkung des pH-Wertes mit Hilfe einer Säure in einen sauren Bereich unter pH = 7 erfolgt und das sich einstellende Fällungsprodukt abgeschieden wird. Insbesondere erfolgt vor Oxidation keine biotopische Behandlung.

Vorzugsweise erfolgt die Abscheidung der Fällungsprodukte durch Sedimetation oder Filtration.

Die Verweilzeit bei der Oxidation ist abhängig von der Reaktionskinetik des eingesetzten Oxidationsmittels abhängig. Als Oxidationsmittel werden wäßrige Mischungen bzw Lösungen von Kaliumpermanganat, Natriumhypochlorit oder Wasserstoffperoxid eingesetzt, wobei die wäßrige Mischung von Wasserstoffperoxid in Wasser bevorzugt wird. Es ist auch denkbar, ein gasförmiges Oxidationsmittel, wie Chlorgas oder Ozon einzusetzen.

Die Auswahl der Säure für die beiden verfahrensgemäßen pH-Wertabsenkungen hängt von der Matrix und Konzentration der Inhaltsstoffe des Fluids in den beiden pH-Wert-Absenkstufen ab. Geeignet sind vor allem anorganische Säuren, wie Salzsäure, Schwefelsäure, Phosphorsäure und Salpetersäure. Der Einsatz von Schwefelsäure wird bevorzugt.

Als Alkalisierungsmittel kommt eine Alkalilauge, wie z.B. Natronlauge oder eine Alkaliverbindung, wie z.B. eine wäßrige Sodalösung in Frage. Auch ist es möglich, wäßrige Lösungen von Erdalkalien, wie z.B. Calcium oder Magnesiumhydroxid oder eine Mischung der angegebenen Alkalisierungsmittel einzusetzen. Fluid und Alkalisierungsmittel werden in Abhängigkeit von der Reaktionskinetik des eingesetzten Alkalisierungsmittels für die erforderliche Zeit umgewälzt.

Es ist von Vorteil, wenn bei der ersten pH-Wert-Absenkung ein Flockungsmittel und bei der pH-Wert-Anhebung ein Flockungshilfsmittel zugesetzt wird. Als Flockungsmittel können je nach Matrix der Inhaltsstoffe vor allem Eisen- und Aluminiumsalze zudosiert werden. Als Flockungshilfsmittel kann z.B. ein Polyelektrolyt kationischer oder anionischer Beschaffenheit eingesetzt werden.

Für die Verfahrensführung wird bevorzugt, daß Oxidation, erste pH-Wert-Absenkung, pH-Wert-Anhebung und zweite pH-Wert- Absenkung in getrennten Behältern erfolgen.

Die Zugabe des Flockungshilfsmittels kann vorzugsweise als Rohrflockungsstufe durchgeführt werden, d.h. das Flockungshilfsmittel wird der Verbindungsleitung zwischen dem Behälter für die pH-Wert- Anhebung und der diesen nachgeschalteten Einrichtung für die Fällungsproduktabscheidung zugeführt. Es könnte erforderlich sein, daß die Zudosierung des Flockungshilfsmittels durch einen statischen Mischer unterstützt wird. Bei einer komplizierten Abwassermatrix ist unter Umständen ein weiterer gesonderter Reaktionsbehälter mit schonender Mischung zur Unterstützung der Makroflockenbildung mit Hilfe des Flockungshilfsmittels erforderlich.

Falls eine Feinabscheidung noch erforderlich ist, wird nach der zweiten Abscheidestufe das Fluid dieser Feinreinigung unterworfen, die vorzugsweise ausgewählt ist aus der Gruppe: Aerobe oder anaerobe Biologie, UV-Bestrahlung, Naßoxidation unter UV-Bestrahlung mit Zugabe von H₂O₂ oder O₃, Membranfiltration, Eindampfung, Ionenaustausch, Adsorption, Strippung, Nachfällung oder Kombinationen der vorgenannten Verfahrensstufen.

Die Erfindung soll nun anhand der beigefügten Figuren näher erläutert werden. Es zeigt:
- FIG. 1: ein Verfahrensfließbild zur Erläuterung der erfindungsgemäßen Verfahrensführung,
- FIG. 2: eine Ausführungsform einer nachgeschalteten Feinreinigung,
- FIG. 3: eine weitere Ausführungsform der nachgeschalteten Feinreinigung,
- FIG. 4: eine dritte Ausführungsform der nachgeschalteten Feinreinigung und
- FIG. 5: eine vierte Ausführungsform der nachgeschalteten Feinreinigung.

Das Deponiesickerwasser 1 wird ohne biologische Vorreinigung direkt und kontinuierlich einem Behälter 2 mit Rührwerk 3 zugeleitet. In den Behälter 2 wird zur Anoxidation ein Oxidationsmittel 4 eingeleitet und der Behälterinhalt wird mit Hilfe des Rührwerks 3 in einer vorgegebenen ReaktionszeitZeitlang durchgemischt. (Eine Voreinmischung des Oxidationsmittels vor Einlauf in den Behälter 1 ist möglich).

Nach der erforderlichen Verweilzeit wird das Fluid in einen zweiten Rekationsbehälter 5 mit einem Rührwerk 6 eingeleitet. Zur Einstellung eines pH-Wertes < 7 wird eine Säure 7 zugeführt. Auch in diesem Reaktionsbehälter wird mit Hilfe des Rührwerks 6 der Behälterinhalt über eine vorgegebene Zeitspanne gut durchmischt.

Bei Bedarf kann in den Reaktionsbehälter 5 zusätzlich ein Flockungsmittel 8 zudosiert werden. Nach Ablauf einer Zeitspanne, die wiederum von der Fluidmatrix und Art der Säure und des eventuell zugesetzten Flockungsmittels abhängig ist, wird das Fluid in einen dritten Reaktionsbehälter 9 mit Rührwerk 10 geführt. In diesem Behälter wird mit Hilfe eines Alkalisierungsmittels 11 ein pH-Wert > 7 eingestellt. Fluid und Alkalisierungsmittel werden in Abhängigkeit von der Reaktionskinetik für die erforderliche Zeit mit Hilfe des Rührwerks 10 umgewälzt.

Im Verlaufe der Rührzeit stellt sich eine deutliche Trübung des Fluids durch Mikroflocken ein. Das Fluid mit den Mikroflocken wird über eine Rohrleitung 12 einem Abscheider 13 zugeführt. Zur Unterstützung und Beschleunigung des Absetzvorganges wird in die Rohrleitung 12 ein Flockungshilfsmittel 14 eindosiert. Wie in der FIG. 1 gestrichelt dargestellt ist, kann die Wirkung des Flockungshilfsmittels durch einen statischen Mischer 15 unterstützt werden, der in die Rohrleitung 12 eingeschaltet ist.

Der Abscheider 13 ist in der FIG. 1 als herkömmliches Sedimentationsbecken dargestellt. Er kann jedoch auch die Form eines Parallelplattenabscheiders oder eines Röhrenabscheiders einnehmen. Bei geringeren Feststoffgehalten im Fluid ist es auch möglich, den Abscheider 12 durch eine Filtration zu ersetzen.

Der abgesetzte Schlamm wird am Unterlauf 14 des Abscheiders 13 abgezogen und muß einer geeigneten Entsorgung, wie z.B. Eindickung, Entwässerung, Trocknung, Wiederverwertung bzw. Deponierung oder Verbrennung über Leitung 16 zugeführt werden.

Vom Abscheider 13 gelangt das Fluid zu einem vierten Reaktionsbehälter 17 mit Rührwerk 17a. In dem Reaktionsbehälter 17 wird mit Hilfe einer Säure 18 ein pH-Wert unter pH = 7 eingestellt. Unter sanfter Umwälzung mit Hilfe des Rührverks 17a erfolgt ein Kristallwachstum im Reaktionsbehälter 17. Die Größe des Reaktionsbehälters 17 ist daher abhängig von der Reaktionsgeschwindigkeit bzw. vom Kristallwachstum.

Vom Reaktionsbehälter 17 wird das Fluid mit den Kristallen einer dem Behälter 17 nachgeschalteten Filtrationseinheit 19 zugeführt. Der Einsatz einer Filtrationseinheit ist bei geringen Feststoffkonzentrationen zweckmäßig; bei höheren Feststoffgehalten ist an dieser Stelle jedoch ein Sedimentationsabscheider, wie der Abscheider 13, vorzuziehen.

Der in der Filtrationseinheit 19 anfallende Schlamm wird über Leitung 20 der Leitung 16 zugeführt, während das Abwasser über Leitung 21 abgezogen und ggfl. einer der in den FIG. 2 - 5 beschriebenen Feinreinigungsstufen oder einer anderen Feinreinigung zugeführt wird.

In der FIG. 2 ist eine Grob- und Feinreinigung für die Reinigung von organisch belasteten Fluiden ohne nennenswerten Anteil nicht flock- oder fällbarer Salze, wie z.B. NH₄ und ohne Begrenzung der Neutralsalzfracht dargestellt.

Dem vorgereinigten Abwasser 21 wird, wie bei 22 schematisch gezeigt, ein flüssiges Oxidationsmittel, wie eine Mischung von H₂O in Wasser oder ein gasförmiges Oxidationsmittel wie O₃ zugeführt. Danach wird das Abwasser einer UV-Bestrahlung 23 unterzogen. Nach einer vorgegebenen Bestrahlungszeit wird danach eine Nachreaktion 24 ermöglicht. Daran schließt sich eine Aktivkohlefiltration 25 an.

In der FIG. 3 ist ein Verfahrensfließbild einer Gesamtreinigung von organisch belasteten Fluiden mit einem hohen Ammoniumanteil und ohne Begrenzung der Neutralsalzfracht dargestellt. Zusätzlich zur Verfahrensführung gemäß FIG. 2 ist zwischen der Nachreaktion 24 und der Aktivkohlefiltration 25 eine Ammoniumfällung 26 oder alternativ eine Ammoniakstrippung 27 eingeschaltet.

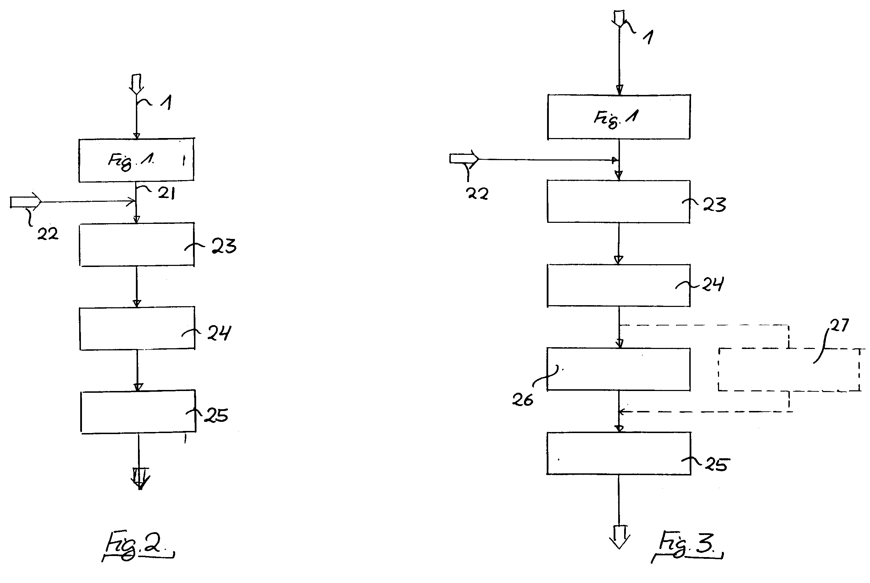

Die in der FIG. 4 gezeigte Verfahrensführung dient für eine Gesamtreinigung von mäßig organisch belasteten Fluiden mit Begrenzung der Neutralsalzfracht und ist ohne nennenswerten Ammoniumanteil dargestellt .

Das über Leitung 21 herangeführte gereinigte Abwasser wird einer Umkehrosmose 28 unterzogen. Das Konzentrat der Umkehrosmose 28 wird einer Eindampfung 29 zugeleitet, deren Destillat zum Verfahren gemäß FIG. 1 zurückgeführt wird, während der Salzrückstand der Eindampfung abgezogen wird. Unter Umständen kann es in Abhängigkeit von der Fluidmatrix (insbesondere Salzkonzentration) sinnvoll sein, daß der Umkehrosmosestufe 28 eine zweite Umkehrosmosestufe 30 nachgeschaltet wird, wie dies in der FIG. 4 gestrichelt dargestellt ist. In diesem Falle würde das Konzentrat der zweiten Umkehrosmose 30 zusammen mit dem Abwasser 21 der ersten Umkehrosmosestufe 28 aufgegeben.

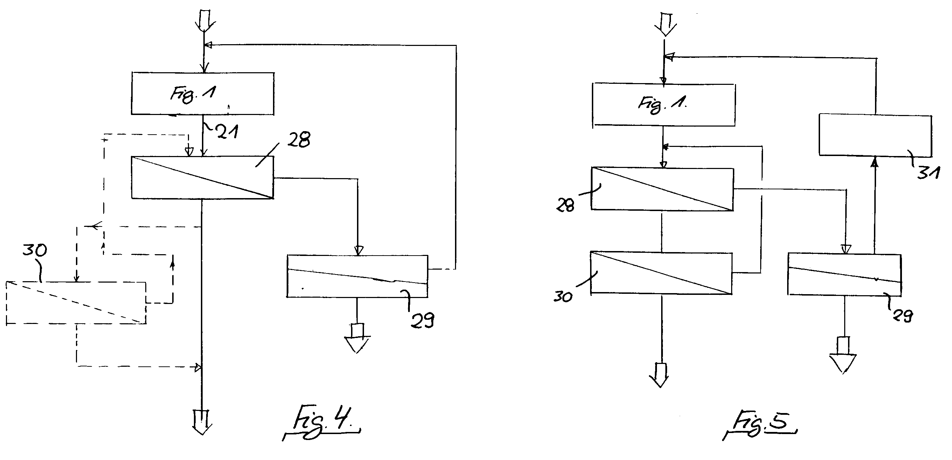

FIG. 5 zeigt ein Beispiel für die Reinigung eines toxikologisch und biologisch refraktär belasteten Fluids mit Begrenzung der Neutralsalzfracht und ohne nennenswertem Ammoniumanteil.

Wie bei der Verfahrensführung gemäß FIG. 4 sind zwei Umkehrosmosestufen 28 und 30, sowie eine Eindampfung 29 vorgesehen. Gegenüber der Verfahrensführung gemäß FIG. 4 wird das Destillat vor Rückführung auf den Eingang der Verfahrensführung gemäß FIG. 1 einer Naßoxidation 31 mit UV-Strahlung alleine oder unter Zusatz eines Oxidationshilfsmittels wie z. B. H₂O₂ oder O₃ unterzogen.

Die FIG. 2 - 5 und die zugehörigen Beschreibungsteile dienen der Erläuterung, daß die Verfahrensführung gemäß FIG. 1 den großen Vorteil aufweist, daß praktisch jedes nachgeschaltete Feinreinigungsverfahren in Kombination mit dem Verfahren gemäß FIG. 1 sicher betrieben werden kann, so daß je nach gewünschtem Reinigungsziel eine gesamte Verfahrenstechnik problemlos möglich ist.

Gemäß FIG. 1 sind der Oxidationsbehälter 2, die drei Reaktionsbehälter 5, 9 und 17 sowie der Abscheider 13 abluftseitig mit einer Abluftleitung 32 verbunden, die Abluft zu einer nicht dargestellten Abluftreinigungsanlage führt. Weiterhin ist in der FIG. 1 gestrichelt auch eine Verbindungsleitung 33 zwischen der Filtrationseinrichtung 19 und dem Reaktionsbehälter 17 dargestellt. Eine Rückführung von Feststoffen aus der Filtrationseinrichtung 19 kann das Kristallwachstum im dritten Reaktionsbehälter 17 unterstützen.

Nachfolgend sollen einige Beispiele erläutert werden.

### Beispiel 1

### Sickerwasser aus Hausmülldeponie

| | |
|---|---|
| Oxidationsmittel 3: | Wasserstoffperoxid |
| Säure 5 und 18 für pH-Wert-Absenkung: | Schwefelsäure |
| Flockungsmittel 8: | keines |
| Alkalisierungsmittel 11: | Kalkmilch |
| Flockungshilfsmittel 14: | anionisch |

| | Rohsickerwasser 1 vor der Behandlung | Abwasser 21 nach der Behandlung |
|---|---|---|
| Farbe, Aussehen | mittelbraun, trüb | klar, kaum merklicher Gelbstich |
| Geruch | aromatisch | leicht stechend |
| CSB | 3.870 mg/l | 365 mg/l |
| AOX | 2.100 µg/l | 240 µg/l |

Bei Nachschaltung einer Naßoxidation mit UV-Bestrahlung und Wasserstoffperoxid als Oxidationsmittel und nachgeschalteter Aktivkohlefiltration wurden folgende Ergebnisse erzielt:

| | nach Naßoxidation und Aktivkohlefiltration |
|---|---|
| Farbe, Aussehen | kristallklar |
| Geruch | leicht süßlich |
| CSB | 135 mg/l |
| AOX | 80 µg/l |

Bei Zudosierung eines Flockungsmittels 8 in Form von Eisen-III-Chlorid wurden folgende Ergebnisse erzielt:

| | Abwasser 21 | nach Naßoxidation und Aktivkohlefiltration |
|---|---|---|
| CSB | 280 mg/l | 225 mg/l |
| AOX | 160 µg/l | 160 mg/l |

Bei Verzicht auf die Zudosierung eines Flockungsmittels 8 konnte also insgesamt ein niedriger Grenzwert erreicht werden, obwohl die Vorreinigung mit Hilfe des Flockungsmittels 8 die besseren Ablaufwerte erzielte.

### Beispiel 2

### Sickerwasser aus Hausmülldeponie

Chemikalien wie bei Beispiel 1 ohne Flockungsmittel 8

| | Rohsickerwasser 1 vor der Behandlung | Abwasser 21 nach der Behandlung |
|---|---|---|
| Farbe, Aussehen | dunkelbraun | leichter Gelbstich |
| Geruch | widerlich | leicht stechend |
| CSB | 4.230 mg/l | 435 mg/l |
| AOX | 3.800 µg/l | 195 µg/l |

| | nach Naßoxidation und Aktivkohlefiltration |
|---|---|
| Farbe, Aussehen | kristallklar |
| Geruch | leicht süßlich |
| CSB | 165 mg/l |
| AOX | 80 µg/l |

### Beispiel 3

### Sickerwasser aus Hausmülldeponie

Chemikalien wie bei Beispiel 2

| | Rohsickerwasser 1 vor der Behandlung | Abwasser 21 nach der Behandlung | nach Naßoxidation und Aktivkohlefiltration |
|---|---|---|---|
| Farbe, Aussehen | dunkelbraun/schwarz | gelblich | fast klar |
| Geruch | ekelerregend | stechend | leicht süßlich |
| CSB | 19.250 mg/l | 1.830 mg/l | 940 mg/l |
| AOX | 4.200 µg/l | 380 µg/l | 120 µg/l |

### Zur Erläuterung:

CSB: Chemischer Sauerstoffbedarf (DIN 38409)
AOX: Adsorbierbare organisch gebundene Halogene (DIN 38409)
(Hierzu 3 Blatt Zeichnungen)

## Patentansprüche

1. Verfahren zum Reinigen eines durch organische und anorganische Inhaltsstoffe belasteten wäßrigen Fluids, insbesondere Haus- oder Sondermülldeponiesickerwassers, bei dem das Fluid zumindest einer chemischen Oxidation mit Hilfe eines Oxidationsmittels, einer Fällung und einer Abscheidung des unlösbaren Fällungsproduktes unterzogen wird,
**dadurch gekennzeichnet**, daß das Fluid direkt mit Hilfe des Oxidationsmittels oxidiert wird, danach der pH-Wert mit Hilfe einer Säure in einem sauren Bereich unter pH = 7 eingestellt und während einer vorgegebenen Zeit gehalten wird, anschließend der pH-Wert mit Hilfe eines Alkalisierungsmittels in einem alkalischen Bereich pH = 7 eingestellt und während einer vorgegebenen Zeit gehalten wird und anschließend das entstandene Fällungsprodukt abgeschieden wird, nach Abscheidung des Fällungsproduktes eine erneute Absenkung des pH-Wertes mit Hilfe einer Säure in einem sauren Breich unter pH = 7 erfolgt und das sich einstellende Fällungsprodukt abgeschieden wird.

2. Verfahren nach Anspruch 1,
**dadurch gekennzeichnet**, daß die Abscheidung der Fällungsprodukte durch Sedimentation oder Filtration erfolgt.

3. Verfahren nach Anspruch 1 oder 2,
**dadurch gekennzeichnet**, daß als Oxidationsmittel wäßrige Mischungen bzw. Lösungen von Kaliumpermanganat, Natriumhypochlorit oder Wasserstoffperoxid oder Chlorgas oder Ozon als gasförmiges Oxidationsmittel eingesetzt werden.

4. Verfahren nach mindestens einem der Ansprüche 1 - 3,
**dadurch gekennzeichnet**, daß als Säure für die pH-Wert-Absenkung eine anorganische Säure ausgewählt aus der Gruppe: Salzsäure, Schwefelsäure, Phosphorsäure und Salpetersäure eingesetzt wird.

5. Verfahren nach mindestens einem der Ansprüche 1 - 4,
**dadurch gekennzeichnet**, daß ein Alkalisierungsmittel ausgewählt aus der Gruppe: Natronlauge, wäßrige Sodalösung, wäßrige Lösungen von Calcium- oder Magnesiumhydroxid oder eine Mischung derselben eingesetzt wird.

6. Verfahren nach mindestens einem der Ansprüche 1 - 5,
**dadurch gekennzeichnet**, daß bei der ersten pH-Wert-Absenkung ein Flockungsmittel und bei der pH-Wert-Anhebung ein Flockungshilfsmittel zugesetzt wird.

7. Verfahren nach mindestens einem der Ansprüche 1 - 6,
**dadurch gekennzeichnet**, daß die Oxidation, erste pH-Wert-Absenkung, pH-Wert-Anhebung und zweite pH-Wert-Absenkung in getrennten Behältern erfolgen.

8. Verfahren nach mindestens einem der Ansprüche 1 - 7,
**dadurch gekennzeichnet**, daß die Zugabe des Flockungshilfsmittels in einer Rohrflockungsstufe erfolgt.

9. Verfahren nach mindestens einem der Ansprüche 1 - 8,
**dadurch gekennzeichnet**, daß nach der zweiten Abscheidestufe das Fluid einer Feinreinigung unterworfen wird, die vorzugsweise ausgewählt ist aus der Gruppe: Aerobe oder anaerobe Biologie, UV-Bestrahlung, Naßoxidation unter UV-Bestrahlung mit Zugabe eines Oxidationsmittels, vorzugsweise H₂O₂ oder O₃, Membranfiltration, Eindampfung, Ionenaustausch, Adsorption, Strippung, Nachfällung oder Kombinationen der vorgenannten Verfahrensstufen.
